# EUROPEAN PATENT APPLICATION

(11) **EP 1 487 040 A1**
(43) Date of publication of application: **15.12.2004**
(21) Application number: 03744533.5
(22) Date of filing: 20.03.2003
(51) Int. Cl.: H01M 4/90, H01M 8/02

(54) **FUEL CELL**

(30) Priority: 20.03.2002 JP 2002078369
(71) Applicant: MATSUSHITA ELECTRIC INDUSTRIAL CO., LTD., Kadoma-shi, Osaka 571-8501 (JP)
(72) Inventor: TANAKA, Aoi, Osaka-shi, Osaka 543-0051 (JP); OKADA, Yukihiro, Katano-shi, Osaka 576-0021 (JP); SHIBUTANI, Satoshi, Hirakata-shi, Osaka 573-0052 (JP); HOJO, Nobuhiko, Neyagawa-shi, Osaka 572-0004 (JP); KANBARA, Teruhisa, Toyonaka-shi, Osaka 560-0056 (JP)
(74) Representative: Patentanwälte Leinweber & Zimmermann
(86) International application number: PCT/JP2003/003393
(87) International publication number: WO 2003/079470

(57) **Abstract**

A fuel cell of the present invention is disclosed that includes a catalysis layer constituting a fuel supply side electrode. The catalysis layer is composed of a catalyst, an electrically conductive substance, a hydrogen-ion conductive electrolytic substance, and a carbon monoxide oxidizer. As the carbon monoxide oxidizer, for example, a transition metal oxide, chloride, or hydride is used. Alternatively, a metal complex containing water as a ligand can also be used as the carbon monoxide oxidizer.

## Description

### TECHNICAL FIELD

This invention generally relates to fuel cells and, more particularly, to a fuel cell of the polyelectrolyte type which directly uses, as the fuel, a liquid fuel containing an organic compound such as methanol, ethanol, dimethylether et cetera and which uses, as the oxidizer, air or oxygen. More specifically, the present invention relates to a fuel supply side electrode of such a type of fuel cell.

### BACKGROUND ART

In typical polyelectrolyte type fuel cells, a fuel capable of generation of protons such as hydrogen is supplied to a fuel electrode and an oxygen-containing oxidizer such as air is supplied to an air electrode. The fuel and the oxidizer undergo electrochemical reaction to produce electricity. In this type of fuel cell, one surface of a polyelectrolyte membrane capable of hydrogen-ion selective transportation is provided with a fuel supply side electrode and the other surface is provided with an oxidizer side electrode. In formation of these electrodes, a catalytic reaction layer, composed of a mixture of either electrically conductive carbon particles on which a metal catalyst is supported or a metal catalyst simple substance and a hydrogen-ion conductive polyelectrolyte, is firstly formed on each surface of the polyelectrolyte membrane. Thereafter, on an outer surface of each catalytic reaction layer, a diffusion layer composed of a material which permits the fuel to pass therethrough and has the property of conducting electrons (e.g., electrically conductive carbon particle paper). A combination of the catalytic reaction layer and the diffusion layer both formed on the surface of the polyelectrolyte membrane is called an electrode. In addition, in fuel cells, gas sealing member, gasket or the like are disposed around the electrodes with the polyelectrolyte membrane held therebetween so as to prevent the fuel supplied to the electrode from leaking out and mixing with oxidizer gases. The gas sealing member and gasket are formed integrally with the electrodes and with the polyelectrolyte membrane, and such an integrated body is called a membrane electrode assembly (hereinafter referred to as "MEA").

Generally, the catalytic reaction layer of the polyelectrolyte type fuel cell is formed by shaping a mixture of electrically conductive carbon particle fine powers on which a precious metal catalyst of the platinum family is supported and a hydrogen-ion conductive polyelectrolyte, into a thin layer. Currently, as the hydrogen-ion conductive polyelectrolyte, perfluoro carbon sulfonic acid is usually used. There are several methods of forming a catalysis layer. For example, in a catalysis layer forming method, electrically conductive carbon particle fine powders supporting thereon a catalyst are mixed with a polyelectrolyte solution prepared by dissolving a hydrogen-ion conductive polyelectrolyte into an alcohols solvent such as ethanol. This mixture is dosed with an organic solvent having a relatively high boiling point such as isopropyl alcohol, butyl alcohol or the like for conversion into an ink-like fluid. This ink is applied onto a polyelectrolyte membrane by means of screen print, spray coat, doctor blade, roll coater, or the like.

When generating electricity by means of a fuel cell of the type which directly uses, as its fuel, an organic fuel such as methanol, the organic fuel is oxidized and generation of CO₂ is inevitable, unlike the case where hydrogen is used as the fuel. Here, since the oxidative reaction of an organic fuel is lower in reaction efficiency than the oxidization of hydrogen, the organic fuel will not be oxidized to CO₂ in a catalysis layer of the fuel supply side electrode, which may result in generation of intermediate products such as CO, COH, HCHO, HCOOH (hereinafter called generically "CO-type compound"). The generation of the CO-type compound represents the following drawbacks. Stated another way, in a catalysis layer constituting an electrode, metals of the platinum group are widely used as a catalyst, as described hereinabove. Among them, platinum is a favorable catalyst. Platinum is of the group X transition metal, which means that the existence of a CO-type compound creates a back donation bond between the d orbital of platinum in which no electron exists and the p* orbital of CO. And, such a bond is strong, and once a CO-type compound is coordinated on platinum it is difficult to remove it therefrom. As a result of adsorption of such a CO-type compound, there occurs catalyst poisoning, thereby causing a reduction in the electrode area. The voltage of the fuel cell falls accordingly. Furthermore, in an oxidative reaction which generates a CO-type compound, oxidative reaction of an organic fuel comes to a stop in a midway stage such as 2-electron oxidative reaction and 4-electron oxidative reaction, therefore causing a reduction in the organic-fuel oxidative reaction efficiency. Therefore, the electricity producing capability of the fuel cell drops.

As a typical method of preventing the occurrence of catalyst poisoning caused by CO-type compound, there is a technique employing a catalyst which is an alloy formed by mixing platinum and ruthenium at a mixing ratio of 1 : 1 (i.e., Pt : Ru = 1 : 1). It is believed that the catalyst is regenerated because a CO-type compound, bonded onto the platinum as described above, is oxidized by OH₂ seeds coordinated in the ruthenium, in this technique. Additionally, there are other alloying techniques employing other than ruthenium. In another alloying technique, tin, molybdenum, or tungsten and platinum are alloyed (see for example non-patent document*). In another alloying technique, a rare earth element (see for example patent document 1** and patent document 2***) and platinum are alloyed.

### REFERENCES

* M. Gotz and H. Wendt, "Binary and ternary anode catalyst formulations including the elements W, Sn and Mo for PEMFCs operated on reformate gas", Electrochim. Acta, Vol. 43, No. 24, pp. 3637-3644, 1988.
** Japanese Patent *Kokai* Publication No. (1998)162839.
*** Japanese Patent *Kokai* Publication No. (1998)255831.

As has been described hereinabove, in order to reduce catalyst poisoning, a catalyst composed of an alloy of platinum and ruthenium or composed of an alloy of platinum and another precious metal element is used with a view to achieving improvement in the methanol oxidizing activation. However, this technique finds it difficult to provide satisfactory poisoning prevention, and the improvement effect of oxidizing activation of an organic fuel by the technique is not always satisfactory. Additionally, in a fuel cell using an organic fuel, CO₂ is inevitably generated on the fuel supply side by oxidative reaction of the fuel, and if a gas of CO₂ thus generated is not discharged immediately to outside the electrode, this may present several problems. One problem is that both the catalyst and the fuel pathway way in the inside of the electrode are covered with CO₂ gas, and another problem is that the fuel which is supplied to the fuel cell and the oxidizer are mixed with CO₂ gas. As a result, there is the drop not only in catalyst reaction area but also in fuel diffusiblity. The voltage of the fuel cell falls accordingly.

On the other hand, also for the case of fuel cells of the type using hydrogen, there is the possibility that a CO gas, contained in a hydrogen gas generated in a hydrogen generator of the fuel cell system and supplied to a fuel cell, generates a bond as described above between a catalyst and CO, as a result of which the catalyst is poisoned by the CO. Furthermore, even when CO is oxidized to CO₂, the above-described problems will arise unless discharging of CO₂ gas is carried out promptly.

### DISCLOSURE OF INVENTION

Accordingly, an object of the present invention is to provide a fuel cell capable of achieving efficient oxidization of converting a CO-type compound adsorbed onto a catalysis layer constituting an electrode into CO₂ and capable of efficient discharge of the generated CO₂ out of the catalysis layer. Therefore, the fuel cell of the present invention is able to perform oxidative reaction with high efficiency and carry out satisfactory generation of electricity.

In order to achieve the above-mentioned objects, the present invention provides a fuel cell comprising a hydrogen-ion conductive electrolyte membrane, a first electrode disposed on one surface of the hydrogen-ion conductive electrolyte membrane, a second electrode disposed on the other surface of the hydrogen-ion conductive electrolyte membrane wherein the first and second electrodes include respective catalysis parts, wherein a fuel is supplied to the first electrode and an oxidizer is supplied to the second electrode, and wherein electricity is produced by oxidative reaction of the fuel. In the fuel cell, at least the catalysis part of the first electrode includes: a catalyst which participates in the fuel oxidative reaction; an electrically conductive substance which constitutes a pathway for electrons generated by the fuel oxidative reaction; a hydrogen-ion conductive electrolyte substance which constitutes a pathway for hydrogen ions generated by the fuel oxidative reaction; and a carbon monoxide oxidizer for oxidizing a carbon monoxide type compound generated in the fuel oxidative reaction.

In the above-described arrangement, since the catalysis part of the first electrode which is supplied with a fuel contains a carbon monoxide oxidizer, this makes it possible to oxidize the carbon monoxide type compound, generated by fuel oxidative reaction taking place in the catalysis part and causing catalyst poisoning, to carbon dioxide by the carbon monoxide oxidizer. Accordingly, occurrence of the catalyst poisoning is prevented, thereby making it possible to achieve improvement in the oxidative reaction efficiency. Therefore, in the fuel cell provided with such a first electrode, it becomes possible to achieve improvement in the performance of producing electricity.

The catalyst may comprise at least one metal element selected from among an element group of platinum, ruthenium, palladium, nickel, rhodium, cobalt, iridium, osmium, and iron. For example, the catalyst may be a metal simple substance, a metal compound, or an alloy.

In accordance with such arrangement, the supplied fuel is oxidized by the action of the catalyst, and electricity is produced by the oxidative reaction.

The electrically conductive substance may comprise carbon black, carbon particles, metal fine particles, or electrically conductive polymers.

As a result of such arrangement, the conductivity of electrons generated in a fuel oxidative reaction is satisfactory and the efficiency of reaction is efficient, thereby realizing satisfactory generation of electricity.

The hydrogen-ion conductive electrolyte substance may be a polyelectrolyte substance. Preferably, the hydrogen-ion conductive electrolyte substance contains, in its main chain, fluorocarbon.

As a result of such arrangement, the conductivity of hydrogen ions generated in a fuel oxidative reaction is improved and the efficiency of reaction is satisfactory, thereby realizing satisfactory generation of electricity.

The carbon monoxide oxidizer may contain any one of a metal compound such as metal oxide, metal chloride, and metal hydride; a metal compound having hydrated water; an organic substance; and a metal complex containing water as a ligand.

By virtue of such arrangement, the carbon monoxide type compound adsorbed onto the catalyst is oxidized to carbon dioxide for desorption of the carbon monoxide type compound from the catalyst. Therefore, the prevention of occurrence of catalyst poisoning is realized.

The metal oxide may partially be crystalline. Alternatively, the metal oxide may entirely be crystalline.

As a result of such arrangement, a carbon monoxide type compound adsorbed onto the catalyst is oxidized efficiently and carbon dioxide generated in the oxidative reaction is discharged promptly out of the catalysis part.

It may be arranged such that the carbon monoxide oxidizer overlies the electrically conductive substance. Alternatively, the carbon monoxide oxidizer may overlie the catalyst. Alternatively the carbon monoxide oxidizer may constitute a mixture together with the catalyst.

It is preferred that the carbon monoxide oxidizer has a particle size of not less than one times nor more than 100 times the particle size of the catalyst.

As a result of such arrangement, a carbon monoxide type compound adsorbed onto the catalyst is oxidized efficiently and carbon dioxide generated in the oxidative reaction is discharged promptly out of the catalysis part. Hereby, the fuel cell is improved in electricity producing performance.

It is preferred that F/C is not less than 0.01 nor more than 2.0 where F(g) denotes the weight of the hydrogen-ion conductive electrolyte substance and C(g) denotes the weight of the electrically conductive substance.

As a result of such arrangement, fuel oxidative reaction by the catalyst takes place efficiently, and diffusion of fuel, carbon dioxide et cetera takes place efficiently in the catalysis part. Hereby, the fuel cell is improved in its electricity producing performance.

It is preferred that M/C is not less than 0.01 nor more than 0.5 where M(g) denotes the weight of the carbon monoxide oxidizer and C(g) denotes the weight of the electrically conductive substance.

As a result of such arrangement, a carbon monoxide type compound adsorbed onto the catalyst in the catalysis part is oxidized efficiently and, in addition, movement of electrons, hydrogen ions, and fuel is realized in the catalysis part. Hereby, the fuel cell is improved in electricity producing performance.

The fuel is an organic compound. For example, the fuel may be formed of methanol, ethanol, ethylene glycol, dimethyl ether, dimethoxymethane, or a mixture of two or more different kinds of these organic compounds.

By virtue of such arrangement, it becomes possible to directly supply an organic compound as a fuel, thereby eliminating the need for the provision of a hydrogen generator or the like for generating hydrogen which is supplied to the fuel cell. The size of fuel cell systems is reduced and the reduction in production costs is achieved. Here, in the case where an organic compound is directly supplied as a fuel, the effects of the present invention are performed effectively because generation of a carbon monoxide type compound takes place on the fuel electrode side.

These objects as well as other objects, features and advantages of the present invention will become apparent to those skilled in the art from the following description with reference to the accompanying drawings.

### BRIEF DESCRIPTION OF DRAWINGS

Figure 1 is a perspective illustration of an arrangement of a fuel cell according to an embodiment of the present invention, showing here an electric cell (cell unit);
Figure 2, comprised of Figure 2A and Figure 2B, is an illustrative view of an arrangement of a membrane electrode assembly (MEA) of Figure 1, wherein Figure 2A is a schematic top plan view of the MEA and Figure 2B is a cross sectional view showing a frame format of the MEA;
Figure 3 is a cross sectional view showing a frame format of an arrangement of a fuel cell according to an embodiment of the present invention, illustrating here a stack construction comprising a lamination of electric cells shown in Figure 1;
Figure 4 graphically shows the discharge characteristics of a fuel cell according to a first example;
Figure 5 is a table showing the discharge characteristics of a fuel cell according to a second example;
Figure 6 graphically shows the discharge characteristics of the fuel cell according to the second example;
Figure 7 is a table showing the discharge characteristics of a fuel cell according to a third example;
Figure 8 graphically shows the discharge characteristics of the fuel cell according to the third example;
Figure 9 is a table showing the discharge characteristics of a fuel cell according to a fourth example;
Figure 10 graphically shows the discharge characteristics of the fuel cell according to the forth example;
Figure 11 is a table showing the discharge characteristics of fuel cells according to a fifth to eighth examples; and
Figure 12 graphically shows the discharge characteristics of the fuel cells according to the fifth to eighth examples.

### BEST MODE FOR CARRYING OUT INVENTION

Hereinafter, embodiments of the present invention will be described with reference to the drawings.

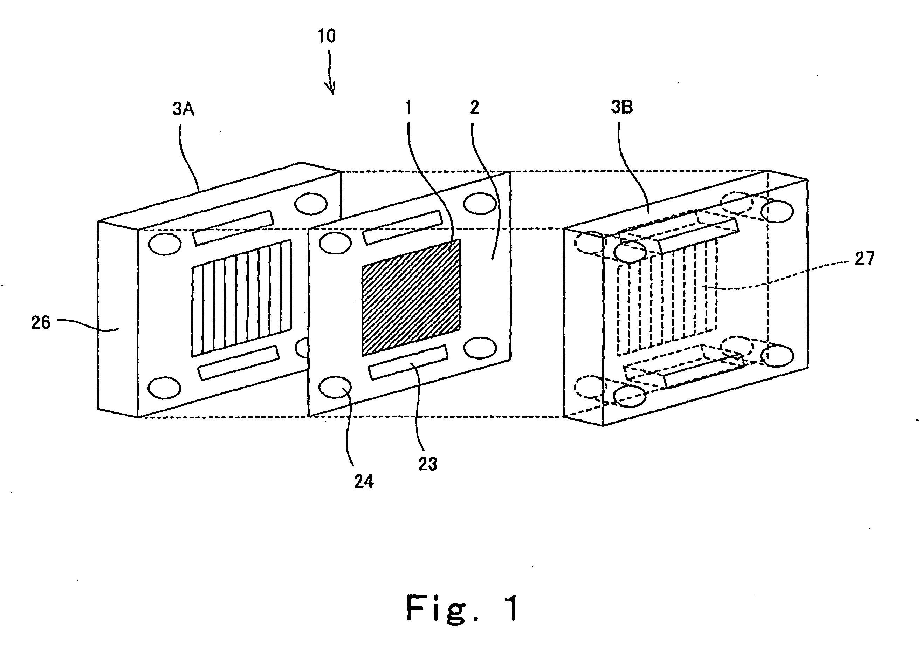

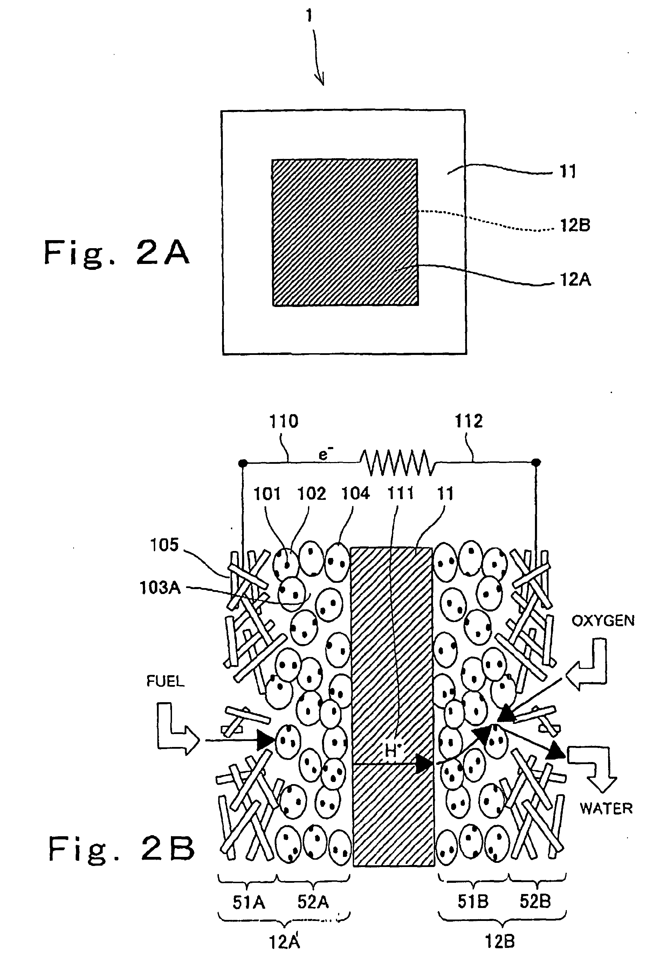

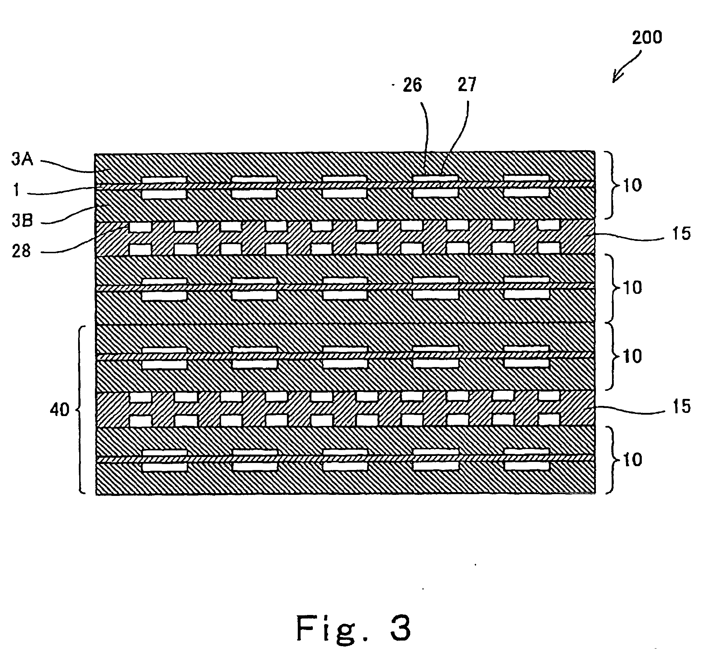

Figure 1 is a perspective illustration schematically showing an arrangement of a fuel cell in accordance with an embodiment of the present invention. More specifically, Figure 1 shows an electric cell (hereinafter called "cell unit"). In addition, Figure 2, comprised of Figure 2A and Figure 2B, is a schematic illustration showing an arrangement of a membrane electrode assembly (hereinafter "MEA") for use in the cell unit of Figure 1, wherein Figure 2A is a schematic top plan view of the MEA and Figure 2B is a schematic cross sectional view of the MEA. Furthermore, Figure 3 is a schematic cross sectional view depicting an arrangement of a fuel cell formed of a lamination of a plurality of cell units shown in Figure 1 (hereinafter called "fuel cell stack").

As shown in Figure 1 and Figures 2(a) and 2(b), in a cell unit 10 of a solid polyelectrolyte type fuel cell of the present embodiment, a gasket plate 2 is joined to the outer periphery of an MEA 1 comprising a hydrogen-ion conductive polyelectrolyte membrane 11. A pair of electrodes 12A, 12B are disposed on surfaces of the MEA 1 so that they face each other across the MEA 1. A pair of separators 3A, 3B are so disposed as to face each other across the gasket plate 2. Although not represented diagrammatically here, a current collecting plate and an insulating plate composed of an electrical insulating material are provided at ends of the cell unit 10, and the entire body is fastened by end plates and fastening rods to form the cell unit 10. Manifold apertures 24 for fuel and oxidizer distribution and manifold apertures 23 for cooling water distribution are formed through the gasket plate 2 and the separators 3A, 3B. Additionally, fuel flowpaths 26, which are consisted of grooves formed in an inner surface of the separator 3A (i.e., an opposing surface of the separator 3A to the MEA 1), are provided in the separator 3A. And, oxidizer flowpaths 27, which are consisted of grooves formed in an inner surface of the separator 3B (i.e., an opposing surface of the separator 3B to the MEA 1), are provided in the separator 3B. Although not represented diagrammatically here, the manifold apertures 24 of the separator 3A are connected to a fuel supply line which is laid outside, and a supply of fuel is provided to the fuel flowpaths 26 via the manifold apertures 24. On the other hand, the manifold apertures 24 of the separator 3B are connected to an oxidizer supply line which is laid outside, and a supply of oxidizer is provided to the oxidizer flowpathes 27 via the manifold apertures 24. And, as can be seen from Figure 3, a cooling plate 15, provided with grooves which consist of cooling water flowpaths 28 in each surface thereof, is arranged between a pair of cell units 10 to form a stack construction unit 40. A plurality of such stack construction units 40 are laminated together to form a fuel cell stack 200.

Referring to Figure 2, the hydrogen-ion conductive polyelectrolyte membrane 11 constituting the MEA 1 is constituted by an ion exchange membrane capable of selective transportation of a hydrogen ion 111 from fuel supply side to oxidizer supply side. A fuel supply side electrode (hereinafter called "fuel electrode") 12A is formed all over one surface of the polyelectrolyte membrane 11 except for its edge areas, and an oxidizer supply side electrode (hereinafter called "oxidizer electrode") 12B is formed all over the other surface of the polyelectrolyte membrane 11 except for its edge areas. The fuel electrode 12A is made up of a catalytic reaction layer 52A and a diffusion layer 51A. The oxidizer supply electrode 12B is made up of a catalysis layer 52B and a diffusion layer 51B. The catalysis layers 52A, 52B are formed on the surfaces of the polyelectrolyte membrane 11, respectively. On the other hand, the diffusion layers 51A, 51B are formed on outer surfaces of the catalysis layers 52A, 52B, respectively. As will be described later, when the fuel cell is in operation, an organic fuel is supplied to the fuel electrode 12A and an oxidizer gas is supplied to the oxidizer electrode 12B. Therefore, it is the fuel electrode 12A that mainly comes under the influence of the generation of a CO-type compound and CO₂ gas. In view of this, hereinafter, the structure of the fuel electrode 12A will be described in detail. The structure of the oxidizer electrode 12B may be the same as that of the fuel electrode 12A. Alternatively, the oxidizer electrode 12B may be different in structure from the fuel electrode 12A, having the same structure as conventional oxidizer electrodes. Here, the oxidizer electrode 12B has the same structure as the fuel electrode 12A, with the exception that the catalysis layer 52B does not contain a carbon monoxide oxidizer 104.

The catalytic reaction layer 52A constituting the fuel electrode 12A includes a catalyst 101, an electrically conductive substance 102, a hydrogen-ion conductive electrolyte substance (not shown), and a carbon monoxide oxidizer 104. And, fine pores 103A which serve as flowpaths through which the supplied fuel and generated CO₂ gas flow are formed in the catalytic reaction layer 52A. Hereinafter, each structural element of the catalytic reaction layer 52A will be described. Figure 2B is an illustrative diagram showing a frame format of an arrangement of the catalytic reaction layer 52A. It should be noted that the shape and size of each structural element, the layout state, the content ratio et cetera are not limited to those of the present embodiment shown in the figures.

The catalyst 101 is a metal catalyst containing a metal element such as platinum, ruthenium, palladium, nickel, rhodium, cobalt, iridium, osmium, iron et cetera. For example, either a metal simple substance selected from among the aforesaid metal elements or a metal compound containing one kind of the aforesaid metal elements may be used as the catalyst 101. Alternatively, an alloy containing two or more different kinds of the aforesaid metal elements may be used as the catalyst 101. The state containing such a plurality of metal elements may be either in the form of a mixture or in the form of a solid solution, additionally, may be entirely or partially alloyed. It is especially preferable that the catalyst 101 is formed of an alloy of platinum and ruthenium. This not only reduces adsorption of a CO-type compound onto the catalyst 101 but also prevents catalyst poisoning.

The electrically conductive substance 102 is provided to support the catalyst 101, and comprises for example carbon black, carbon particles, metal fine particles, or electrically conductive polymers.

The hydrogen-ion conductive electrolyte substance is composed of a polyelectrolyte substance. It is especially preferable that the hydrogen-ion conductive electrolyte substance contains, in its main chain, fluorocarbon. For example, perfluoro electrically conductive carbon particle sulfonic acid or the like may be used as the hydrogen-ion conductive electrolyte substance.

The carbon monoxide oxidizer 104 may comprise a metal compound such as metal oxide, metal chloride, and metal hydride. Alternatively, the carbon monoxide oxidizer 104 may comprise a metal compound having hydrated water. In addition, the carbon monoxide oxidizer 104 may comprise either an organic substance or a metal complex containing water as a ligand. Hereinafter, specific examples will be described.

As the metal oxide, for example, transition metal oxides are used. It is especially preferable to use oxides of transition metals of the groups III to XIV. Especially, metal oxides of manganese, copper, cobalt, nickel, chrome, germanium, vanadium, tin, silver, iron, and tungsten are used. More specifically, either a transition metal oxide (e.g., MnO₂, CuO, Co₃O₄, NiO, Cr₂O₃, GeO₂, V₂O₅, SnO₂, AgO, Fe₂O₂ et cetera) or a composite oxide containing two or more different kinds of these transition metal oxides may be used. Here, preferably these metal oxides are at least partially crystalline. If the whole of such a metal oxide is amorphous, this causes strong adsorption of water which participates in oxidation of a CO-type compound onto to the surface of the metal oxide, and although it is required that the water be moved to the CO-type compound for oxidizing the CO-type compound into CO₂, the water cannot be not available in the oxidation because of such a strong adsorbability. This results in a drop in the capability of oxidizing a CO-type compound. Besides, if a metal oxide is entirely amorphous, its surface wettability increases. As the result of this, a gas of CO₂ generated by oxidation of a CO-type compound is not discharged promptly out of the catalysis layer. Therefore, it is highly likely that the foregoing problems will arise. In view of this, the arrangement that a metal oxide is partially (more preferably entirely) crystalline achieves not only improvement in the capability of oxidizing a CO-type compound but also improvement in the efficiency of discharging CO₂ gas.

As the metal chloride, for example, transition metal chlorides are used. Especially, metal chlorides of titanium, vanadium, chrome, manganese, iron, cobalt, nickel, copper, zinc, molybdenum, ruthenium, silver, tungsten, iridium et cetera are used. More specifically, either a metal chloride (such as TiCl₄, VCl₄, CrCl₃, MnCl₂, FeCl₂, CoCl₂, NiCl₂, CuCl₂, ZnCl₂, ZrCl₄, NbCl₅, MoCl₅, RuCl₃, AgCl, WCl₅, IrCl₃ et cetera) or a composite chloride containing two or more different kinds of these metal chlorides may be used.

As the metal hydride, for example, transition metal hydrides are used. More specifically, either a metal hydride of the group XII, XIII, or XIV transition metal or its composite hydride may be used.

As the metal complex containing water as a ligand, RuCp*(OH₂)₃, IrCP*(OH₂)₃, or the like may be used. "Cp*" indicates a pentamethylcyclopentadienyl.

The carbon monoxide oxidizer 104 may overlie the electrically conductive substance 102 supporting thereon the catalyst 101. Alternatively, the carbon monoxide oxidizer 104 may overlie the catalyst 101. The carbon monoxide oxidizer 104 may exist in such a state as to form a mixture together with the catalyst 101. The carbon monoxide oxidizer 104 of this type may be mixed with the catalyst 101 and the electrically conductive substance 102 by dry or wet blending during formation of the catalytic reaction layer 52A. Furthermore, the carbon monoxide oxidizer 104 may be formed integrally with the catalyst 101 and the electrically conductive substance 102 by means of coating, spraying, deposition, electroplating, chemical plating, sputtering, vacuum deposition, or the like.

Because of its strong oxidation power to the substance to be oxidized, the carbon monoxide oxidizer 104 is able to oxidize a CO-type compound adsorbed onto the catalyst 101 of the fuel electrode 12A and to facilitate desorption of the compound out of the catalyst 101. For example, in the case where the carbon monoxide oxidizer 104, comprised of either a metal oxide (such as MnO₂, CuO, Co₃O₄, NiO, Cr₂O₃, GeO₂, V₂O₅, SnO₂, AgO, Fe₂O₂ et cetera) or a composite oxide containing two or more different kinds of these metal oxides, is used, these metal oxides are weak in metal-oxygen bonding and, therefore, their oxidation power to the substance to be oxidized by oxygen ion is strong, as a result of which it becomes possible to oxidize a CO-type compound adsorbed onto the catalyst 101 and desorb it from the catalyst 101. This prevents poisoning of the fuel electrode 12A caused by the CO-type compound.

Here, it is preferable that the carbon monoxide oxidizer 104 has a particle size of not less than one times nor more than 100 times the particle size of the catalyst 101. If the particle size of the carbon monoxide oxidizer 104 is less than one times that of the catalyst 101, in other words, if the particle size of the carbon monoxide oxidizer 104 is smaller than that of the catalyst 101, this increases the area of contact between a CO-type compound and the carbon monoxide oxidizer 104, thereby achieving effective oxidation of the CO-type compound. In this case, however, the fine pore 103A of the catalytic reaction layer 52A which consists of a gas flowpath is stopped up by particles of the carbon monoxide oxidizer 104, and gas diffusiblity becomes insufficient, thereby making it difficult to assure a diffusion pathway for CO₂ generated by oxidation of the CO-type compound. Therefore, it becomes difficult to discharge CO₂ out of the catalytic reaction layer 52A. If such a CO₂ gas is not discharged at once from inside the catalytic reaction layer 52A, this causes the drop in velocity at which fuel is supplied to the catalyst 101. On the other hand, if the particle size of the carbon monoxide oxidizer 104 is more than 100 times the particle size of the catalyst 101, it is difficult to oxidize a CO-type compound adsorbed onto the catalyst 101 because the area of contact between the CO-type compound and the carbon monoxide oxidizer 104 is narrow. In view of this, in order to effectively achieve oxidation of the CO-type compound and to immediately discharge CO₂ generated by the CO-type compound oxidation to the outside, it is preferable that the particle size of the carbon monoxide oxidizer 104 falls within the aforesaid range.

Additionally, preferably the ratio of M/C, where M(g) is the weight of the carbon monoxide oxidizer 104 of the catalytic reaction layer 52A and C(g) is the weight of the electrically conductive substance 102 of the catalytic reaction layer 52A, ranges between 0.01 and 0.5. If the M/C ratio is less than 0.01, stated another way, if the ratio of the carbon monoxide oxidizer 104 is small, this makes it difficult to establish sufficient contact between the carbon monoxide oxidizer 104 and the catalyst 101. Therefore, the carbon monoxide oxidizer 104 becomes insufficient in the function of oxidizing a CO-type compound adsorbed onto the catalyst 101. On the other hand, if the M/C ratio is greater than 0.5, stated another way, if the ratio of the carbon monoxide oxidizer 104 is great, the organic-fuel and hydrogen-ion conduction pathways become obstructed and, because of the fact that the carbon monoxide oxidizer 104 is lower in electron conductivity than the electrically conductive substance 102, the electron conductivity of the catalytic reaction layer 52A falls and the resistance of the catalytic reaction layer 52A increases. This results in the drop in fuel cell output.

Furthermore, preferably the ratio of F/C, where F(g) is the weight of the hydrogen-ion conductive electrolyte substance of the catalytic reaction layer 52A and C(g) is the weight of the electrically conductive substance 102 of the catalytic reaction layer 52A, ranges between 0.01 and 2.0. In the fuel cell, it is important to secure an organic-fuel supply pathway, a hydrogen-ion conducting pathway, and an electron conducting pathway in the catalytic reaction layer 52A of the fuel electrode 12A and, in addition, the electricity producing performance of the fuel cell depends greatly upon the area of interface among these pathways, i.e., the area of three-phase interface among the fine pore 103A which becomes an organic-fuel supply pathway, the hydrogen-ion conductive electrolyte substance which becomes a hydrogen-ion conducting pathway, and the electrically conductive substance 102 which becomes an electron conducting pathway. As the three-phase interface area increases, the output of the fuel cell is improved. Accordingly, when the F/C ratio is less than 0.01, the area of interface defined between the hydrogen-ion conductive electrolyte substance and the electrically conductive substance 102 diminishes, which is a disadvantage at the time of generation of electricity in which the density of electric current is great. Furthermore, when the F/C ratio exceeds 2.0, the organic-fuel supply pathway and the reaction gas pathway are blocked up by the hydrogen-ion conductive electrolyte substance, thereby diffusion rate of them controls the generation of electricity. Consequently, the fuel cell output will drop, especially in a range of great electrical current density. In view of the above, it is preferable that the F/C ratio ranges between 0.01 and 2.0. This makes it possible to achieve improvement in electricity producing performance of the fuel cell.

In the fuel electrode 12A, the diffusion layer 51A is formed on an upper surface of the catalytic reaction layer 52A composed of the aforementioned elements. The diffusion layer 51A is made of an electron conductive material capable of permitting flow of an organic fuel therethrough, such as electrically conductive carbon particle paper, cloth made of electrically conductive carbon fibers 105. The diffusion layer 51A of the fuel electrode 12A and the diffusion layer 51B of the oxidizer electrode 12B are placed one upon the other so that they face each other across the hydrogen-ion conductive polyelectrolyte membrane 11, and are joined by fusion bonding. Hereby, the MEA 1, formed by combining the electrodes 12A, 12B and the electrolyte membrane 11 into one united body, is provided.

In operation of the fuel cell, an organic fuel is introduced, through the manifold apertures 24 of the separator 3A, into the fuel supply flowpath 26 from a fuel supply line (not shown). As the organic fuel, an organic compound (such as methanol, ethanol, ethylene glycol, dimethyl ether, dimethyl methane, dimethoxyethane et cetera), a mixture containing such an organic compound, or the like may be used. Here, for example, methanol is used as the organic fuel. On the other hand, an oxidizer is introduced, through the manifold apertures 24 of the separator 3B, into the oxidizer supply flowpath 27 from an oxidizer supply line (not shown). Here, as the oxidizer, air is used. Additionally, a supply of cooling water is provided through the manifold apertures 24 of the separators 3A, 3B and through the cooling water flowpath 28 of the cooling plate 15 from a cooling water supply line (not shown).

In the fuel electrode 12A, the organic fuel supplied passes through the diffusion layer 51A and reaches the catalytic reaction layer 52A in which a hydrogen ion 111, an electron 110, and a gas of CO₂ are generated by the action of the catalyst 101. In other words, in the fuel electrode 12A, the organic fuel supplied undergoes an oxidative reaction to generate a gas of CO₂. The electron 110 passes through an externally connected circuit 112 and arrives at the oxidizer electrode 12B. Hereby, electric current flows. On the other hand, the hydrogen ion 111 moves in the inside of the hydrogen-ion conductive polyelectrolyte membrane 11 and reaches the oxidizer electrode 12B. In the oxidizer electrode 12B, by virtue of the action of the catalyst 101, the electron 110 and the hydrogen ion 111 from the fuel electrode 12A react with oxygen supplied from the outside to generate water. Therefore, in the entire fuel cell, reactions, by which water and CO₂ are generated from the organic fuel and oxygen, take place, and electricity is produced at the time of the reactions. Theoretically, fuel cells employing an organic fuel generate greater electricity in comparison with fuel cells employing hydrogen. Besides, in a fuel cell system using an organic fuel, the organic fuel can be supplied directly to the fuel cell, thereby eliminating the need for the provision of a hydrogen generator or the like. This achieves system downsizing.

Here, in the aforesaid reaction taking place in the fuel electrode 12A, the organic fuel is not oxidized into CO₂ in one step, as a result of which a CO-type compound, which is a product in a halfway process of the oxidative reaction, is generated. Such a chemical compound adsorbs the surface of the catalyst 101 constituting the catalytic reaction layer 52A of the fuel electrode 12A. Here, in the present embodiment, since the catalytic reaction layer 52A contains, as its constituent component, the carbon monoxide oxidizer 104, the CO-type compound adsorbed onto the catalyst 101 is oxidized by the carbon monoxide oxidizer 104, is converted into CO₂, and is desorbed from on the catalyst 101. Accordingly, it becomes possible to effectively prevent the CO-type compound from poisoning the catalyst 101. Additionally, in the catalytic reaction layer 52A of the fuel electrode 12A according to the present embodiment, the kind of material and the ratio of the catalyst 101, the electrically conductive substance 102, the hydrogen ion conducting electrolyte substance, and the carbon monoxide oxidizer 104 are set respectively so that the organic-fuel supply pathway and CO₂ discharge pathway formed by the fine pores 103A in the reaction layer 52A; the hydrogen-ion conduction pathway formed by the hydrogen-ion conductive polyelectrolyte substance which is a constituent component of the catalytic reaction layer 52A; and the electron conduction pathway formed by the electrically conductive substance 102 which is a constituent component of the reaction layer 52A are all adequately secured for the achievement of effective substance movement and oxidative reaction in these pathways and, in addition, so that oxidation of a CO-type compound is effectively made by adequately securing the area of contact between the carbon monoxide oxidizer 104 and the CO-type compound. Therefore, in the fuel cell provided with the fuel electrode 12A described above, oxidation of the organic fuel is made stably and effectively and efficient, and satisfactory electricity generation is achieved.

In the above, the description has been made in terms of the case where the catalyst 101 is supported on the electrically conductive substance 102 in the catalytic reaction layer 52A. Furthermore, the catalyst 101 may be so arranged not as to be supported. Even in this case, the same effects as described above are obtained by mixing, at adequate weight ratio, a catalyst, a hydrogen-ion conductive polyelectrolyte substance, and a carbon monoxide oxidizer. For example, in the case of employing a catalyst of the non-support type, the M/P ratio is preferably between 0.01 and 0.3, where M(g) represents the weight of the carbon monoxide oxidizer and P(g) represents the weight of the catalyst.

### EXAMPLE

Hereinafter, an example of the present invention will be explained concretely. In the example, firstly the MEA 1 as shown in Figure 2 was prepared, and the fuel-cell cell unit 10 as shown in Figure 1 was prepared using the MEA 1. And, a plurality of fuel-cell cell units 10 were laminated together to form the fuel cell stack 200 of Figure 3. With the use of such fuel cell stacks 200 thus prepared, the fuel-cell voltage measurements were performed on the following examples as well as on comparative examples.

During preparation of the MEA 1, the catalytic reaction layer 52A of the fuel electrode 12A was formed all over one surface (except for its edge areas) of the hydrogen-ion conductive polyelectrolyte membrane (Nafion 117, product of DuPont and hereinafter called "Nafion membrane") 11 which is an 8 cm by 8 cm square, while the catalysis layer 52B of the oxidizer electrode 12B was formed all over the other surface of the Nafion membrane 11 except for its edge areas. Here, each of the catalysis layers 52A, 52B was shaped like a 5 cm by 5 cm square. And, as the diffusion layers 51A, 51B, either a carbon cloth (GF-20-31E, product of Nippon Carbon Co., Ltd.) or a carbon non-woven cloth (TGPH060, product of Toray Industries, Inc.) was disposed upon the upper surface of each of the catalysis layers 52A, 52B, and these layers are superimposed with the Nafion membrane 11 placed centrally and joined together by means of a hot pressing technique. In the case of using a carbon cloth, the pressing temperature was 140°C, the pressing pressure was 20 kgf/cm², and the pressing time was 15 minutes. On the other hand, in the case of using a carbon non-woven cloth, the pressing temperature was 150°C, the pressing pressure was 15 kgf/cm², and the pressing time was 30 minutes. In the way as described hereinabove, the MEA 1, formed by combining the electrodes (the fuel and oxidizer electrodes 12A, 12B) constituted by the catalysis layers 52A, 52B and the diffusion layers 51A, 51B and the Nafion membrane 11, was prepared.

The catalytic reaction layer 52A of the fuel electrode 12A was formed as follows. At first, platinum and ruthenium particles having an average particle size of about 30 Å and constituting the catalyst 101 were respectively supported at 25% by weight, on the conductive carbon particles 102 (more specifically, Ketjen Black EC, product of Ketjen Black International) having an average primary particle size of 30 nm, to prepare catalyst support particles A. Next, a catalysis layer material was prepared by mixing the catalyst support particles A, perfluoro electrically conductive carbon particle sulfonic acid (Flemion, product of Asahi Glass Co., Ltd., and hereinafter called "Flemion") which is a hydrogen-ion conductive polyelectrolyte substance, and a carbon monoxide oxidizer used in each of the following examples by means of respective methods of the examples described later. And then, the catalytic reaction layer 52A is formed on one surface of the Nafion membrane 11 by using the catalysis layer material by means of respective methods of the examples. In the catalytic reaction layer 52A thus formed, the ratio of the weight C(g) of the electrically conductive carbon particles (Ketjen Black EC) contained in the catalyst support particles A to the weight F(g) of the hydrogen-ion conductive polyelectrolyte substance (Flemion), i.e., the F/C ratio, was set to respective values shown in the following examples. Additionally, the ratio of the weight C(g) of the electrically conductive carbon particles (Ketjen Black EC) contained in the catalyst support particles A to the weight M(g) of the carbon monoxide oxidizer, i.e., the M/C ratio, was set to respective values shown in the following examples.

On the other hand, the catalysis layer 52B of the oxidizer electrode 12B was formed by the following method. At first, platinum particles having an average particle size of about 30 Å and constituting the catalyst 101 were supported at 50 % by weight on Ketjen Black EC, to prepare catalyst support particles B. Next, the catalyst support particles B were mixed with Flemion to prepare a paste-like catalysis layer material. And then, the catalysis layer material was printed onto the other surface of the Nafion membrane 11 to form the catalysis layer 52B. In the catalysis layer 52B thus formed, the ratio of the weight C(g) of the electrically conductive carbon particles (Ketjen Black EC) contained in the catalyst support particles B to the weight F(g) of the hydrogen-ion conductive polyelectrolyte substance (Flemion), i.e., the F/C ratio, was 1.0.

Furthermore, in preparation of the fuel cell, the gasket plate 2 of rubber was joined to the outer periphery of the MEA 1 prepared according to the forgoing method (the edge of the Nafion membrane 11), and the manifold apertures 23, 24 were formed through the gasket plate 2. The two separators 3A, 3B, composed of a graphite plate impregnated with resin, having an outer size of 10 cm by 10 cm and a thickness of 1.3 mm, and provided with 0.5 mm-deep grooves serving as the fuel flowpaths 26 or as the oxidizer flowpaths 27 on a surface thereof, were provided. The separator 3A provided with the oxidizer flowpaths 27 was disposed so that the flowpaths 27 were situated face to face with one surface of the MEA 1. On the other hand, the separator 3B provided with the fuel flowpaths 26 was disposed so that the flowpaths 26 were situated face to face with the other surface of the MEA 1. A current collecting plate made of stainless steel with its surface gold-plated and an insulating plate composed of an electrical insulating material were provided at both ends of the pair of the separators 3A, 3B which were placed one upon the other with the MEA 1 sandwiched therebetween and end plates and fastening rods were used for fixing. The fastening pressure at this time was 15 kgf/cm² per separator area. In the way as described above, the cell unit 10 as an electric cell was prepared. Furthermore, a cooling plate 15 provided with a 0.5 mm-deep groove serving as the cooling water flowpath 28 was interposed between a pair of cell units 10 prepared in the above-described way to form a stack construction unit 40, and five stack construction units 40 were laminated one upon the other to form a fuel cell stack 200 made up of a total of ten cell units 10. A current collecting plate made of stainless steel with its surface gold-plated and an electric insulating plate were disposed on both ends of the fuel cell stack 200, and end plates and fastening rods were used for fixing. The fastening pressure at this time was 15 kgf/cm² per separator area. Discharge testing on each of the following examples using a fuel cell stack having the above-described construction was carried out in the following methods. Namely, a water solution of methanol (temperature: 60°C; concentration: 2 mol/l) was supplied as a fuel to the a fuel supply electrode side of the fuel cell stack 200 and, at the same time, air was supplied as an oxidizer to an oxidizer electrode side of the fuel cell stack 200 through a bubbler of 60°C at an air utilization ratio (Uo) of 30 % while maintaining the fuel cell stack temperature at 60°C. At this time, pressure was applied so that the pressure at the air side outlet was 2 atm. The fuel cell was operated by such supply of fuel and air to generate electric energy and the voltage at electric energy generation time was measured.

### EXAMPLE 1

In the first example, the catalytic reaction layer 52A of the fuel electrode 12A was formed for preparation of the fuel cell 1 in the following method. Namely, at the time of forming the catalytic reaction layer 52A of the fuel electrode 12A of the fuel cell 1, the foregoing catalyst support particles A and Flemion were mixed together to prepare a catalyst paste. Then, manganese dioxide was added to the catalyst paste as a carbon monoxide oxidizer, and dispersed by ultrasonic waves. As the manganese dioxide, Dennman FMH, product of Tosoh Corporation in the form of pulverized particles having an average particle size of 300 nm was used. Here, the ratio of the weight of the electrically conductive carbon particle contained in the catalyst support particles A to the weight of the hydrogen-ion conductive polyelectrolyte substance, i.e., the F/C ratio, was 1.0. Additionally, the ratio of the weight of the electrically conductive carbon particles contained in the catalyst support particles A to the weight of the manganese dioxide, i.e., the M/C ratio, was 0.1. The catalyst paste thus prepared was printed onto a surface of the Nafion membrane 11 to form the catalytic reaction layer 52A of the fuel electrode 12A. In this case, the amount of platinum catalyst in the catalytic reaction layer 52A was 1.84 mgPt/cm². On the other hand, the amount of platinum catalyst in the catalysis layer 52B of the oxidizer electrode 12B formed by the aforesaid method was 1.40 mgPt/cm².

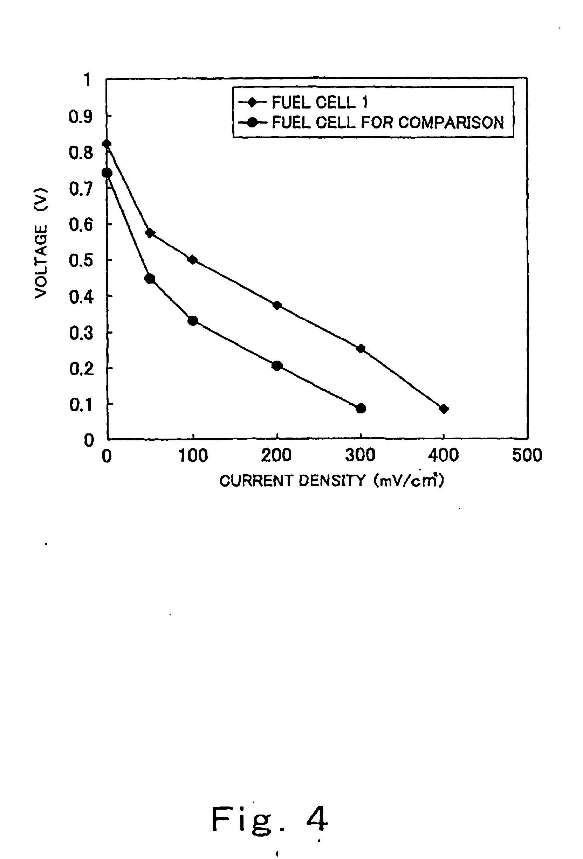

The discharge characteristics of the above-described fuel cell 1 were examined. The results of the examination showed that the voltage of a single cell (electric cell) of the fuel cell 1 at a current density of 200 mA/cm² was 0.374 V. Additionally, the voltage measurements were carried out while making variation in current density, and Figure 4 shows the results. The measurement result of a single cell (electric cell) showed here was obtained by dividing the actually-measured voltage of the fuel cell stack 200 by the number of cells for converting into a single cell.

On the other hand, for the purpose of comparison, a fuel cell identical in structure with the fuel cell 1 with the exception that the catalytic reaction layer 52A of the fuel electrode 12A contained therein no manganese dioxide, that is a fuel cell in which the catalytic reaction layer 52A of the fuel electrode 12A contained no carbon monoxide oxidizer (hereinafter called "comparative fuel cell"), was prepared. The discharge characteristics of the comparative fuel cell were examined in the same way that the fuel cell 1 was examined. The results of the examination showed that the voltage of a single cell (electric cell) of the comparative fuel cell at a current density of 200 mA/cm² was 0.201 V. Additionally, the voltage measurements were carried out while making variation in current density, and Figure 4 shows the results.

From the above results, it is clear that the arrangement that the catalytic reaction layer 52A of the fuel electrode 12A contains manganese dioxide as a carbon monoxide oxidizer contributes to improvement in fuel cell voltage.

### EXAMPLE 2

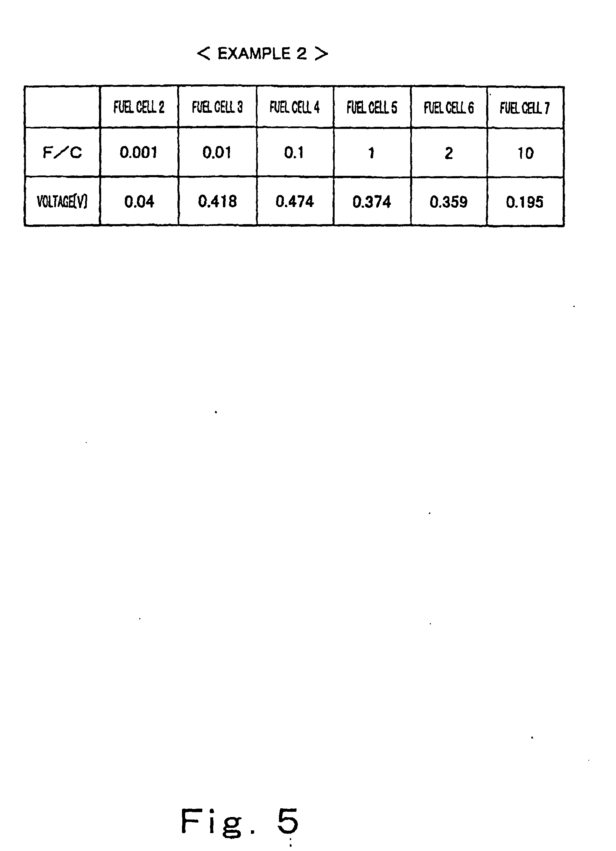

In the second example, fuel cells 2-7, each having a different F/C ratio in the catalytic reaction layer 52A of the fuel electrode 12A from the other, were prepared. The discharge characteristics of each of the fuel cells 2-7 were examined to find out the relationship between the F/C ratio and the fuel cell voltage. These fuel cells 2-7 were prepared in the same way that the fuel cell 1 of the first example was made with the exception that each catalyst paste was prepared such that the ratio (F/C) of the weight F of FLEMION as a hydrogen-ion conductive polyelectrolyte substance to the weight C of KETJEN BLACK EC as electrically conductive carbon particles contained in the catalyst support particles A assumed a respective value shown in Figure 5. Additionally, the voltage of each of the fuel cells 2-7 was measured in the same way that the voltage of the fuel cell 1 of the first example was measured.

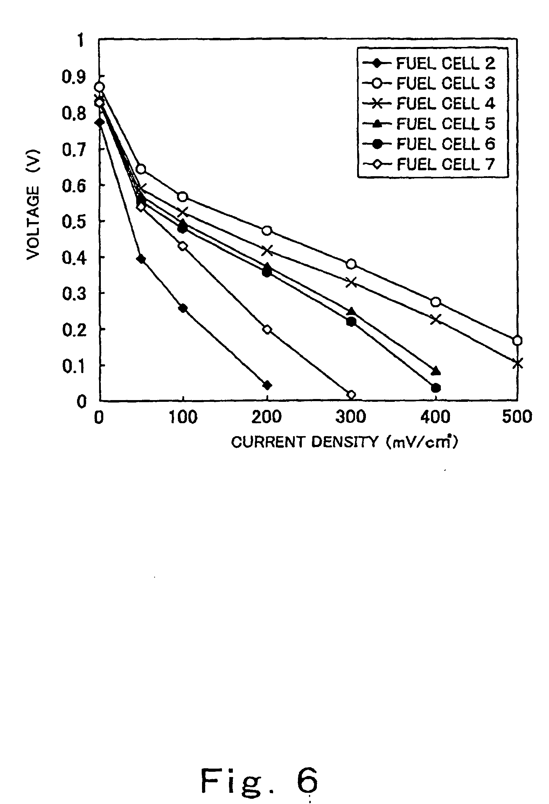

Referring to Figure 5, there are shown the results of the voltage measurement of a single cell (electric cell) of each fuel cell 2-7 at a current density of 200 mA/cm². The voltage measurements were carried out while making variation in electric current density in each fuel cell 2-7 and Figure 6 shows the results. It is clear from the results that preferably the F/C ratio ranges between 0.01 and 2.0. The reason is that if the F/C ratio falls within such a range, it is conceivable that the total area of three-phase interface of the fuel flowpath, the hydrogen ion conduction pathway, and the electron conduction pathway increases in the catalytic reaction layer 52A of the fuel electrode 12A, thereby achieving improvement in oxidative reaction efficiency and improvement in the voltage generated by the fuel cell.

### EXAMPLE 3

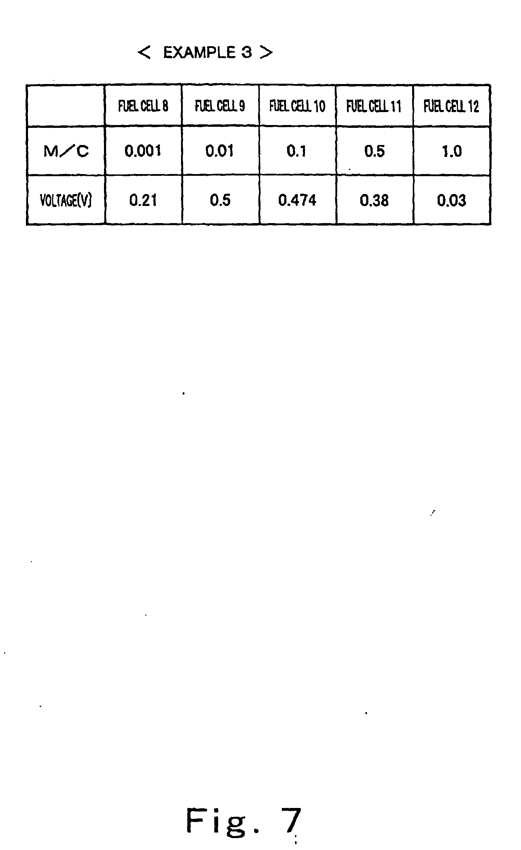

In the third example, fuel cells 8-12, each having a different M/C ratio in the catalytic reaction layer 52A of the fuel electrode 12A from the other, were prepared. The discharge characteristics of each of the fuel cells 8-12 were examined to find out the relationship between the M/C ratio and the fuel cell voltage. These fuel cells 8-12 were prepared in the same way that the fuel cell 1 of the first example was made with the exception that each catalyst paste was prepared such that the ratio (M/C) of the weight M of the manganese dioxide as a carbon monoxide oxidizer to the weight C of KETJEN BLACK EC as electrically conductive carbon particles contained in the catalyst support particles A assumed a respective value shown in Figure 7 and that the F/C ratio was 0.1. Additionally, the voltage of each fuel cell 8-12 was measured in the same way as the voltage of the fuel cell 1 of the first example was measured.

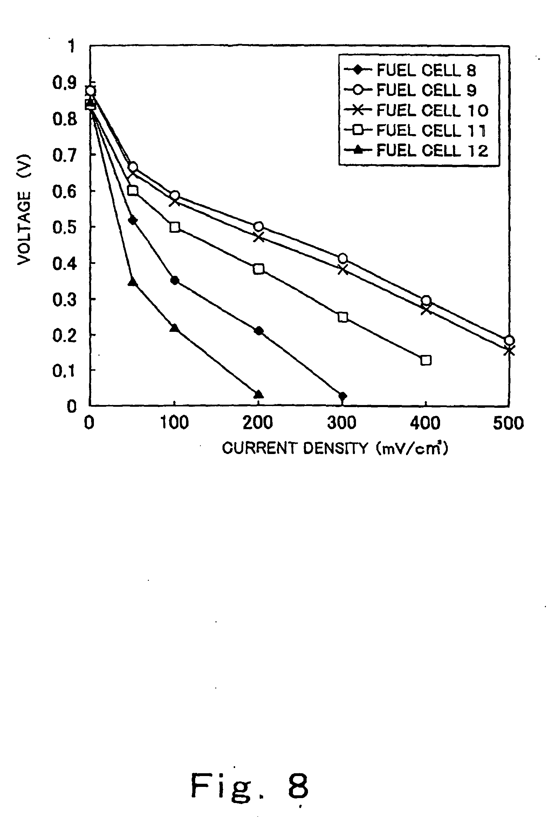

Referring to Figure 7, there are shown the results of the voltage measurement of a single cell (electric cell) of each fuel cell 8-12 at a current density of 200 mA/cm². The voltage measurements were carried out while making variation in electric current density in each fuel cell 8-12 and Figure 8 shows the results. It is clear from the results that preferably the M/C ratio ranges between 0.01 and 5.0. The reason is that if the M/C ratio falls within such a range, it is conceivable that the drop in catalyst reactivity and the drop in electron conductivity are prevented at the same time in the catalytic reaction layer 52A of the fuel electrode 12A, thereby achieving improvement in the voltage generated by the fuel cell.

### EXAMPLE 4

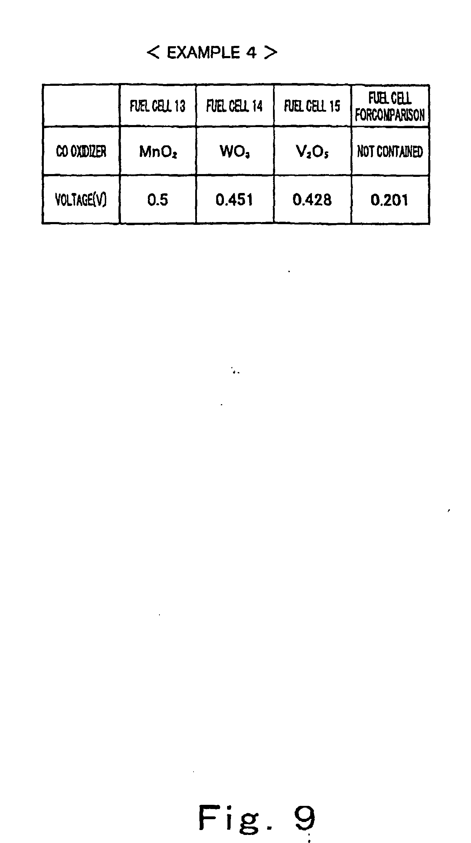

In the fourth example, fuel cells 13-15, each containing a different type of carbon monoxide oxidizer in the catalytic reaction layer 52A of the fuel electrode 12A from the other, were prepared. The discharge characteristics of each of the fuel cells 13-15 were examined to find out the relationship between the type of carbon monoxide oxidizer and the fuel cell voltage. The fuel cells 13-15 were prepared in the same way that the fuel cell 1 of the first example was prepared, with the exception that MnO₂-based manganese oxides, WO₃-based tungsten oxides, and V₂O₅-based vanadium oxides were used to prepare a catalyst paste, and that the F/C ratio and the M/C ratio were 0.1 and 0.01 respectively in the catalyst paste (see Figure 9). Additionally, the voltage of each fuel cell 13-15 was measured in the same way that the voltage of the fuel cell 1 of the first example was measured.

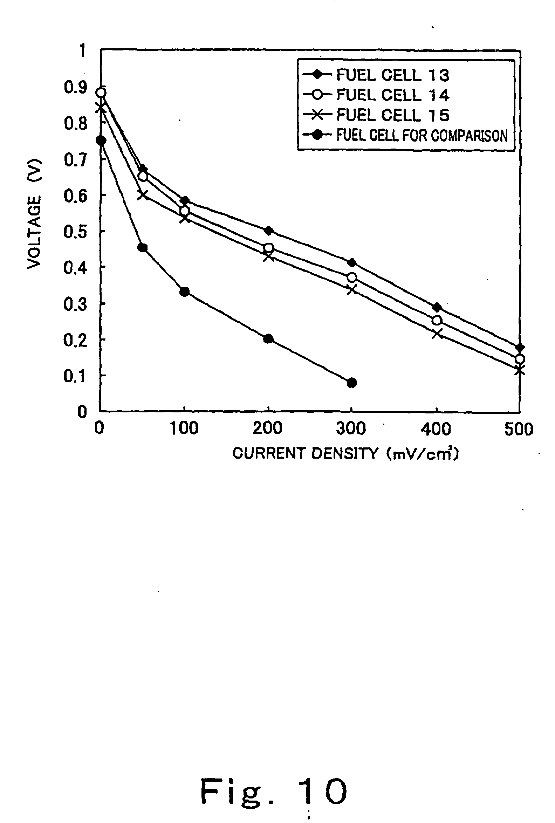

Referring to Figure 9, there are shown the results of the voltage measurement of a single cell (electric cell) of each fuel cell 13-15 at a current density of 200 mA/cm². The voltage measurements were carried out while making variation in current density and Figure 10 shows the results. In Figures 9 and 10, there are shown the results of the comparative fuel cell of the first example for the sake of comparison. It is clear from the results that, in addition to manganese oxides, oxides of tungsten and vanadium were also effective as the carbon monoxide oxidizer contained in the catalytic reaction layer 52A of the fuel electrode 12A.

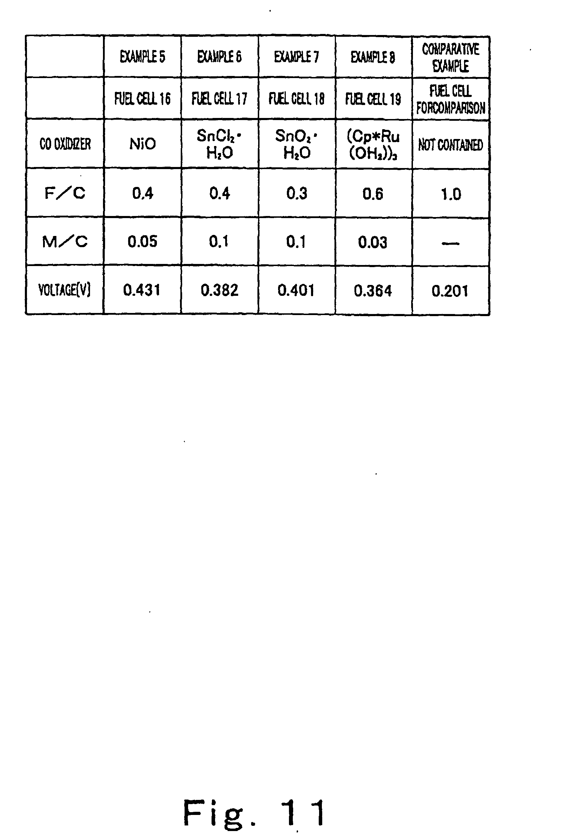

In the following examples 5-8, as shown in Figure 11, fuel cells 16-19, each containing a different type of carbon monoxide oxidizer in the catalytic reaction layer 52A of the fuel electrode 12A from the other, were prepared by using different methods. The discharge characteristics of each fuel cell 16-19 were examined in the same way that the discharge characteristics of the fuel cell 1 of the first example was examined. Hereinafter, the way of forming the catalytic reaction layer 52A of the fuel electrode 12A in each of the fifth to eighth examples will be described in detail.

### EXAMPLE 5

In the fifth example, in formation of the catalytic reaction layer 52A of the fuel electrode 12A, pre-ground nickel oxide particles having an average particle size of 3 µm were added to the foregoing catalyst support particles A as a carbon monoxide oxidizer,. Thereafter, these particles were dry mixed together. The catalyst support powders thus mixed were dispersed in a 5% isopropanol water solution, and then a Flemion serving as a hydrogen-ion conductive polyelectrolyte solution was added thereto to prepare a catalyst paste. In the catalyst paste thus blended, the F/C ratio was 0.4 and the M/C ratio was 0.05.

The catalyst paste described above was printed onto a surface of the Nafion membrane 11 to form the catalytic reaction layer 52A, as in the first example. The amount of platinum catalyst of the catalytic reaction layer 52A thus formed was 1.85 mgPt/cm². On the other hand, the catalysis layer 52B of the oxidizer electrode 12B was formed in accordance with the foregoing method, with the exception that the catalyst paste was prepared by dispersing the aforesaid catalyst support particles B in a 5% isopropanol water solution and, thereafter, by addition of a Flemion solution thereto. The amount of platinum catalyst of the catalysis layer 52B of the oxidizer electrode 12B was 1.38 mgPt/cm². In the way as described above, the fuel cell 16 was prepared.

### EXAMPLE 6

In the sixth example, in formation of the catalytic reaction layer 52A of the fuel electrode 12A, the aforesaid catalyst support particles A were dispersed in ion exchange water and slurried therewith. And, a 0.5 % methanol water solution with SnCl₂· H₂O serving as a CO oxidizer dissolved therein, was added dropwise to the slurry. The slurry thus prepared was filtered and baked at 200°C in an atmosphere of nitrogen. The slurry thus baked was ground to catalyst powders. Here, observations of images by means of TEM were made by using a part of the catalysis layer material powders. The results showed that the average primary particle sizes of carbon black, platinum-ruthenium alloy, and SnCl₂ were 30 nm, 3 nm, and 100 nm, respectively. It was observed that SnCl₂ was present mainly on the carbon black.

The aforesaid catalyst material powders were dispersed in a solution of isopropanol : water = 1 : 1 and Flemion was added thereto to prepare a catalyst paste. And, this catalyst paste was printed 50 µm thick onto a Teflon sheet with a doctor blade and the Teflon sheet was dried for 5 hours at room temperature in an atmosphere of nitrogen. After the drying step, the sheet on which the catalytic reaction layer 52A had been printed was cut away into a predetermined size. Such a cut-away sheet portion was thermal-transferred onto the Nafion membrane 11 so that its catalysis layer printing surface was positioned on a surface of the membrane. During such thermal transferring, the Teflon sheet was positioned on each surface of the Nafion membrane 11 disposed therebetween with the printing surface located inside, and the Teflon sheets and the Nafion membrane 11 were joined together by hot pressing with the Nafion membrane 11 held tight between the catalytic reaction layers 52A. In this pressing step, a pressure of 20 kgf/cm² was applied at 130°C for 15 minutes. After the joint step, the Teflon sheets were removed, and a 180 µm-thick carbon non-woven cloth (TGPH060, product of Toray Industries, Inc.) was joined to the surface of the catalytic reaction layer 52A by means of hot pressing to form the diffusion layer 51A. In this pressing step, a pressure of 15 kgf/cm² was applied at 150°C for 30 minutes.

In order to measure the ratio of weight of each component of the catalytic reaction layer 52A formed in the way described above, the catalyst paste was applied onto a copper foil and the ratio of Pt to Sn was measured by means of XPS. The results showed that the Pt/Sn ratio was 75 : 25 and the Pt/Sn weight ratio in the catalytic reaction layer 52A was 50 : 10. Here, the ratio of supporting Pt in the catalyst support particles A is, as described above, 25 %. Therefore, the M/C ratio in the catalytic reaction layer 52A is 0.1. Additionally, the F/C ratio of the catalytic reaction layer 52A was 0.4 and the amount of platinum catalyst in the catalytic reaction layer 52A was 1.80 mgPt/cm². On the other hand, the catalysis layer 52B of the oxidizer electrode 12B was formed in the same way that the catalytic reaction layer 52A of the fuel electrode 12A was formed, with the exception that the catalyst support particles B were used. The amount of platinum catalyst in the catalysis layer 52B of the oxidizer electrode 12B was 1.41 mgPt/cm². In the way as described hereinabove, the electrodes 12A, 12B were formed and the fuel cell 17 was prepared.

### EXAMPLE 7

In the seventh example, in formation of the catalytic reaction layer 52A of the fuel electrode 12A, the aforesaid catalyst support particles A were dispersed in ion exchange water and were slurried therewith. And, a 0.5 % methanol water solution with SnO₂· H₂O dissolved therein was added dropwise to the slurry. The slurry was stirred. This was followed by dropwise addition of a 5 % water solution of NaOH to the slurry. Thereafter, the slurry was stirred with an ultrasonic homogenizer. After filtering, cleaning was carried out five times with ion exchange water. The resulting solid substance was dried at 100°C by an oven and, thereafter, was ground to catalysis layer material powders. Here, observations of images by means of TEM were made using a part of the catalysis layer material powders. The results showed that the average primary particle sizes of carbon black, platinum-ruthenium alloy, and SnO₂ were 30 nm, 3 nm, and 30 nm, respectively and that SnO₂ was present mainly on the platinum-ruthenium alloy.

With the use of the catalysis layer material powders thus prepared, the catalytic reaction layer 52A was formed employing the same technique as the sixth example. In order to measure the ratio of weight of each component of the catalytic reaction layer 52A, the Pt/Sn ratio was measured using the same method as the sixth example. The results showed that the Pt/Sn weight ratio was 75 : 25 and the Pt/Sn weight ratio in the catalytic reaction layer 52A was 50 : 10. Here, the ratio of supporting Pt in the catalyst support particles A is, as described above, 25 %. Therefore, the M/C ratio in the catalytic reaction layer 52A is 0.1. Additionally, the F/C ratio of the catalytic reaction layer 52A was 0.3 and the amount of platinum catalyst of the catalytic reaction layer 52A was 1.80 mgPt/cm². On the other hand, the catalysis layer 52B of the oxidizer electrode 12B was formed in the same way that the catalytic reaction layer 52A was formed, with the exception that the catalyst support particles B were used. The amount of platinum catalyst contained in the catalysis layer 52B of the oxidizer electrode 12B was 1.41 mgPt/cm². In the way as described hereinabove, the electrodes 12A, 12B were formed and the fuel cell 18 was prepared.

### EXAMPLE 8

In the eighth example, in formation of the catalytic reaction layer 52A of the fuel electrode 12A, the catalyst support particles A were dispersed in water to form a catalyst paste. The catalyst paste was dosed with a 10 wt% water solution which is a carbon monoxide oxidizer prepared by dissolving a tetra aqua pentamethyl cyclopentadienyl ruthenium complex (Cp*Ru(OH₂)₃) in ion exchange water. The catalyst paste thus prepared was heated and stirred at 50°C for 8 hours. Thereafter, the catalyst paste was cooled to room temperature. And, Flemion was added to the catalyst paste and the resulting substance was stirred all night long. In the catalyst paste thus obtained, the F/C ratio was 0.6 and the M/C ratio was 0.03. Next, the catalyst paste was applied onto a surface of the Nafion membrane 11, and a sheet of carbon paper (TGPH090, product of Toray Industries, Inc.) was positioned on an outer surface of the catalyst paste and was joined thereto by hot pressing to form the fuel electrode 12A. The amount of platinum catalyst contained in the catalytic reaction layer 52A was 1.83 mgPt/cm². On the other hand, the catalysis layer 52B of the oxidizer electrode 12B was formed in the same way that the catalytic reaction layer 52A was formed, with the exception that the catalyst paste was prepared by addition of Flemion into water in which the catalyst support particles B were dispersed. The amount of platinum catalyst contained in the catalysis layer 52B was 1.40 mgPt/cm². In the way as described hereinabove, the electrodes 12A, 12B were formed and the fuel cell 19 was prepared.

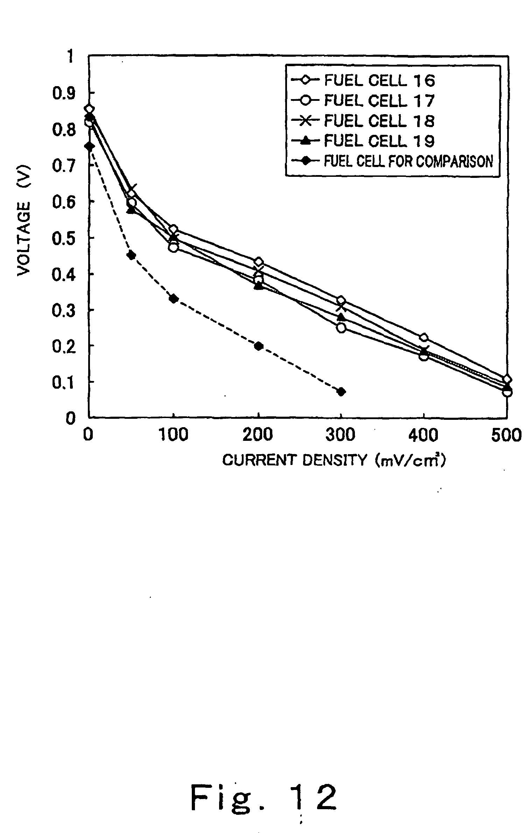

The discharge characteristics of each of the fuel cells 16-19 of the fifth to eighth examples were examined and the results are shown here. Referring to Figure 11, there are shown the results of the voltage measurement of a single cell (electric cell) of each of the fuel cells 16-19 at a current density of 200 mA/cm². The voltage measurements were carried out while making variation in current density in each fuel cell 16-19 and Figure 12 shows the results. Here, there are also shown the results of the comparative fuel cell of the first example for the sake of comparison. As can be seen from Figures 11 and 12, it is clear that, in the fuel cells 16-19 formed by the aforesaid various methods and provided with the catalysis layers 52A containing different carbon monoxide oxidizers, their fuel cell voltage is improved.

In the first to eighth examples, methanol is fed, as an organic fuel, to the fuel cell. Also in the cases where other organic fuels (such as ethanol, ethylene glycol, dimethyl ethane, dimethoxyethane et cetera and a mixture thereof) are used, the same effects as obtained by using methanol were obtained. In addition to supplying such organic fuels in the form of liquid, they may be evaporated beforehand and be supplied in the form of vapor. Furthermore, in the first to eighth examples, the diffusion layers 51A, 51B of the electrodes were formed using electrically conductive carbon particle paper and carbon non-woven cloth. However, the diffusion layers 51A, 51B may be formed using other than these materials. For example, other electrically conductive carbon particle black, electrically conductive carbon particle cloth, metal mesh et cetera may be used. Also, in this case, the same effects are obtained.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the sprit of the invention and all modifications which come within the scope of the appended claims are reserved.

### INDUSTRIAL APPLICABILITY

The present invention provides fuel cells suited for use as polyelectrolyte type fuel cells of the type in which an organic fuel is supplied, as a fuel, directly to the fuel electrode, e.g., polyelectrolyte type fuel cells used in household cogeneration systems. Additionally, the application of a joined structure (MEA) of a solid polyelectrolyte and electrodes according to the present invention is not limited to the above. The MEA of the present invention can be applied to various sensors such as alcohol sensors.

## Claims

1. A fuel cell comprising a hydrogen-ion conductive electrolyte membrane, a first electrode disposed on one surface of said hydrogen-ion conductive electrolyte membrane, a second electrode disposed on the other surface of said hydrogen-ion conductive electrolyte membrane wherein said first and second electrodes include respective catalysis parts, wherein a fuel is supplied to said first electrode and an oxidizer is supplied to said second electrode, and wherein electricity is produced by oxidative reaction of said fuel,
at least said catalysis part of said first electrode including:
a catalyst which participates in said fuel oxidative reaction,
an electrically conductive substance which constitutes a pathway for electrons generated by said fuel oxidative reaction,
a hydrogen-ion conductive electrolyte substance which constitutes a pathway for hydrogen ions generated by said fuel oxidative reaction, and
a carbon monoxide oxidizer for oxidizing a carbon monoxide type compound generated in said fuel oxidative reaction.

2. The fuel cell as set forth in claim 1, wherein said catalyst comprises at least one metal element selected from among an element group of platinum, ruthenium, palladium, nickel, rhodium, cobalt, iridium, osmium, and iron.

3. The fuel cell as set forth in claim 2, wherein said catalyst is a metal simple substance, a metal compound, or an alloy.

4. The fuel cell as set forth in claim 1, wherein said electrically conductive substance comprises carbon black, carbon particles, metal fine particles, or electrically conductive polymers.

5. The fuel cell as set forth in claim 1, wherein said hydrogen-ion conductive electrolyte substance is a polyelectrolyte substance.

6. The fuel cell as set forth in claim 5, wherein said hydrogen-ion conductive electrolyte substance contains, in its main chain, fluorocarbon.

7. The fuel cell as set forth in claim 1, wherein said carbon monoxide oxidizer contains any one of a metal compound such as metal oxide, metal chloride, and metal hydride; a said metal compound having hydrated water; an organic substance; and a metal complex containing water as a ligand.

8. The fuel cell as set forth in claim 7, wherein said metal oxide is partially crystalline.

9. The fuel cell as set forth in claim 7, wherein said metal oxide is entirely crystalline.

10. The fuel cell as set forth in claim 1, wherein said carbon monoxide oxidizer overlies said electrically conductive substance.

11. The fuel cell as set forth in claim 1, wherein said carbon monoxide oxidizer overlies said catalyst.

12. The fuel cell as set forth in claim 1, wherein said carbon monoxide oxidizer constitutes a mixture together with said catalyst.

13. The fuel cell as set forth in claim 1, wherein said carbon monoxide oxidizer has a particle size of not less than one times nor more than 100 times the particle size of said catalyst.

14. The fuel cell as set forth in claim 1, wherein F/C is not less than 0.01 nor more than 2.0 where F(g) denotes the weight of said hydrogen-ion conductive electrolyte substance and C(g) denotes the weight of said electrically conductive substance.

15. The fuel cell as set forth in claim 1, wherein M/C is not less than 0.01 nor more than 0.5 where M(g) denotes the weight of said carbon monoxide oxidizer and C(g) denotes the weight of said electrically conductive substance.

16. The fuel cell as set forth in claim 1, wherein said fuel is an organic compound.

17. The fuel cell as set forth in claim 16, wherein said fuel is formed of methanol, ethanol, ethylene glycol, dimethyl ether, dimethoxymethane, or a mixture of two or more different kinds of said organic compounds.

## Amended claims

### Amended claims under Art. 19.1 PCT

1. **Amended)** A fuel cell comprising a hydrogen-ion conductive electrolyte membrane, a first electrode disposed on one surface of said hydrogen-ion conductive electrolyte membrane, a second electrode disposed on the other surface of said hydrogen-ion conductive electrolyte membrane wherein said first and second electrodes include respective catalysis parts, wherein a fuel is supplied to said first electrode and an oxidizer is supplied to said second electrode, and wherein electricity is produced by oxidative reaction of said fuel,
said catalysis part of at least said first electrode including:
a catalyst which participates in said fuel oxidative reaction,
an electrically conductive substance which constitutes a pathway for electrons generated by said fuel oxidative reaction,
a hydrogen-ion conductive electrolyte substance which constitutes a pathway for hydrogen ion generated by said fuel oxidative reaction, and
a granular carbon monoxide oxidizer for oxidizing a carbon monoxide type compound generated in said fuel oxidative reaction.

2. The fuel cell as set forth in claim 1, wherein said catalyst comprises at least one metal element selected from among an element group of platinum, ruthenium, palladium, nickel, rhodium, cobalt, iridium, osmium, and iron.

3. The fuel cell as set forth in claim 2, wherein said catalyst is a metal simple substance, a metal compound, or an alloy.

4. The fuel cell as set forth in claim 1, wherein said electrically conductive substance comprises carbon black, carbon particles, metal fine particles, or electrically conductive polymers.

5. The fuel cell as set forth in claim 1, wherein said hydrogen-ion conductive electrolyte substance is a polyelectrolyte substance.

6. The fuel cell as set forth in claim 5, wherein said hydrogen-ion conductive electrolyte substance contains, in its main chain, fluorocarbon.

7. The fuel cell as set forth in claim 1, wherein said carbon monoxide oxidizer contains any one of a metal compound such as metal oxide, metal chloride, and metal hydride; a said metal compound having hydrated water; an organic substance; and a metal complex containing water as a ligand.
